Europäisches Patentamt

(19) European Patent Office

Office européen des brevets

(11) Publication number: **0 160 142**
A1

(12) **EUROPEAN PATENT APPLICATION**

(21) Application number: **84303219.4**

(22) Date of filing: **11.05.84**

(51) Int. Cl.⁴: **C 10 G 31/11**

(30) Priority: **27.04.84 US 603030**

(43) Date of publication of application:
**06.11.85 Bulletin 85/45**

(84) Designated Contracting States:
**DE FR GB IT**

(71) Applicant: **Exxon Research and Engineering Company**
**P.O.Box 390 180 Park Avenue**
**Florham Park New Jersey 07932(US)**

(72) Inventor: **Gudelis, David Arvydas**
**2614 Kaymar Cresant Bright Grove**
**Sarnia Ontario NON 1CO(CA)**

(72) Inventor: **Hafez, Mahmoud Mostafa**
**1278 Willa Drive**
**Sarnia Ontario N7S 1T7(CA)**

(72) Inventor: **Pauls, Henry Werner**
**1315 Morreene Road**
**Durham North Carolina(US)**

(72) Inventor: **Shaw, David Henry**
**16314 Coliseum Avenue**
**Baton Rouge Louisiana(US)**

(74) Representative: **Somers, Harold Arnold et al,**
**ESSO Engineering (Europe) Ltd. Patents & Licences Apex**
**Tower High Street**
**New Malden Surrey KT3 4DJ(GB)**

(54) Combination membrane extraction dewaxing of lube oils.

(57) A method for processing a lube oil distillate (12) to remove aromatics and waxy compounds using is disclosed. Solvent (14) is mixed with the distillate (12) and the mixture passed through a membrane separation zone (10). Retentate (22) from the membrane separation zone (10) is passed through a dewaxing zone (20) for removal of waxy compounds.

EP 0 160 142 A1

Croydon Printing Company Ltd.

## Background of the Invention

This invention is related to an improvement in the processing of lube oil feedstocks. More specifically, the present invention is directed at an improvement in aromatics extraction and dewaxing of a lube oil.

The processing of lube oil feedstocks is energy intensive and usually utilizes different solvents for extraction and for dewaxing. The feedstock typically is passed through an extraction zone to remove aromatics compounds and through a dewaxing zone to remove paraffinic compounds. In the extraction zone the lube oil basestock normally is extracted continuously countercurrently with a solvent, such as N-methylpyrrolidone (NMP). Extract and raffinate phases produced in the extraction zone normally are passed to separate distillation zones to recover the solvent. In addition, when NMP is used as the extraction zone solvent, water is added and its concentration periodically adjusted. The raffinate, after solvent separation, passes to the dewaxing zone. Here the raffinate is contacted with another solvent system, e.g., ketones. The mixture is cooled to crystallize the wax and the wax is separated by filtration. The dewaxed oil and wax cake are distilled to recover solvent for reuse.

A typical feature of current lube oil production processes is the use of two different solvent systems for extraction and dewaxing. This is primarily because solvents, such as methyl ethyl ketone, methyl isobutyl ketone, toluene, acetone and mixtures thereof, which frequently are used in the dewaxing step cannot be used in a conventional extraction zone because of their relatively poor selectivity for aromatics extraction. Similarly, extraction solvents, such as NMP, phenol and furfural, cannot be used for dewaxing since they do not possess the solubility and viscosity characteristics required for dewaxing.

Another feature is that extraction solvents, such as NMP, are relatively difficult to separate from the oil and require rather elaborate, energy intensive separation facilities. In addition, regulation of water content of the NMP solvent may necessitate the use of an additional separation zone.

The use of membranes for the separation of aromatics from non-aromatics is known. U. S. Patent No. 2,970,106 discloses the use of a cellulosic membrane for separating aromatics from non-aromatics by a pervaporation process. As used herein, pervaporation is a process in which specific components of a liquid stream selectively dissolve into and diffuse through a thin film. Downstream of the film these components are removed by evaporation from the surface by applying vacuum or sweeping with an inert gas. U. S. Patent No. 3,556,991 also describes a method for enriching the extract solution in aromatics hydrocarbons employing a cellulose semi-permeable dialysis membrane. In the '991 patent the feed is contacted with a solvent selectively miscible with the aromatics in an extraction zone, after which the extract is passed to a separation chamber in which the solvent is separated from the aromatic hydrocarbon at pressures of from 1 to 500 psi. The preferred semi-permeable membranes include cellulose derivatives.

U. S. Patent No. 2,947,687 discloses the use of a cellulosic membrane for aromatics separation from middle distillates by pervaporation and perstraction. As used herein, perstraction is a process in which specific components of a liquid stream selectively dissolve into and diffuse through a thin film. Downstream of the film these components are removed by contacting with a liquid. Various substituted hydrocarbon solvents are used as perstracting media to increase the rate of aromatics permeation. Among the substituted hydrocarbons disclosed are oxygen-containing organic compounds, such as acetone, methyl ethyl ketone, methyl butyl ketone, cyclohexanone, acetone and the like.

U. S. Patent Nos. 2,958,656 and 2,958,657 also describe the use of pervaporation and/or perstraction to increase permeation of aromatics hydrocarbons through non-porous cellulosic membranes using solvents, such as oxygenated compounds. Among the suggested compounds were alcohols, ethers, alcohol ethers, esters, ketones, acetals, and chlorinated compounds, such as trichloroethylene and propylene chloride.

These membrane processes, dialysis, pervaporation or perstraction, however, are limited by low fluxes and by elaborate downstream processing.

European patent publication No. 79.303057.8 discloses the use of a regenerated cellulose membrane for organic liquid separation processes such as solvent recovery in pure form in the dewaxing process to reduce solvent recovery energy.

To improve the lube oil production process it would be desirable to provide a process in which a common solvent could be utilized for both aromatics removal and wax removal.

It also would be desirable to overcome the flux limitations and complexity of membrane processes by using reverse osmosis conditions. Reverse osmosis is defined to be the separation of a solution utilizing a membrane by the application of a pressure sufficient to overcome the osmotic pressure of the solute.

It also would be desirable to provide a process in which the solvent utilized for aromatics removal was easily separated from the feedstock fractions.

The subject invention is directed at the use of a solvent assisted, pressure driven reverse osmosis process in which the solvent is mixed with the feed to enhance aromatics removal from lube oil basestocks. In a preferred embodiment the solvent used in the membrane separation zone is the same as that used in the dewaxing zone so that retentate from the membrane separation zone is passed to a dewaxing zone without intermediate solvent removal.

Summary of the Invention

A method for removing aromatics compounds and wax from a lube oil distillate, said method comprising:

A. admixing solvent with the lube oil distillate and passing the mixture through a membrane separation zone adapted to separate the mixture into a permeate relatively rich in aromatics and a retentate relatively lean in aromatics; and,

B. passing retentate from the membrane separation zone to a dewaxing zone wherein the retentate is separated into a relatively wax-free fraction and a fraction relatively rich in wax.

In a preferred embodiment, retentate from the membrane separation zone is passed to the dewaxing zone without intermediate solvent removal. The membrane separation zone preferably is a reverse osmosis membrane separation zone. The composition of the solvent added to the distillate and to the retentate may be the same or may differ. Solvent removed from the dewaxing zone and/or from the permeate exiting the membrane separation zone may be recirculated and admixed with the lube oil distillate entering the membrane separation zone. In a preferred embodiment the semi-permeable membrane is selected from the groups of materials consisting of regenerated cellulose, polyimides and polyacrylonitrile, with the regenerated cellulose membrane being most preferred. Preferred solvents are solvents selected from the group consisting of methyl ethyl ketone (MEK), methyl isobutyl ketone (MIBK), acetone, toluene and mixtures thereof. In one embodiment of the present invention, solvent stripped from the permeate and solvent removed from the dewaxing zone both are recycled for admixture with the lube oil feedstock entering the membrane separation zone.

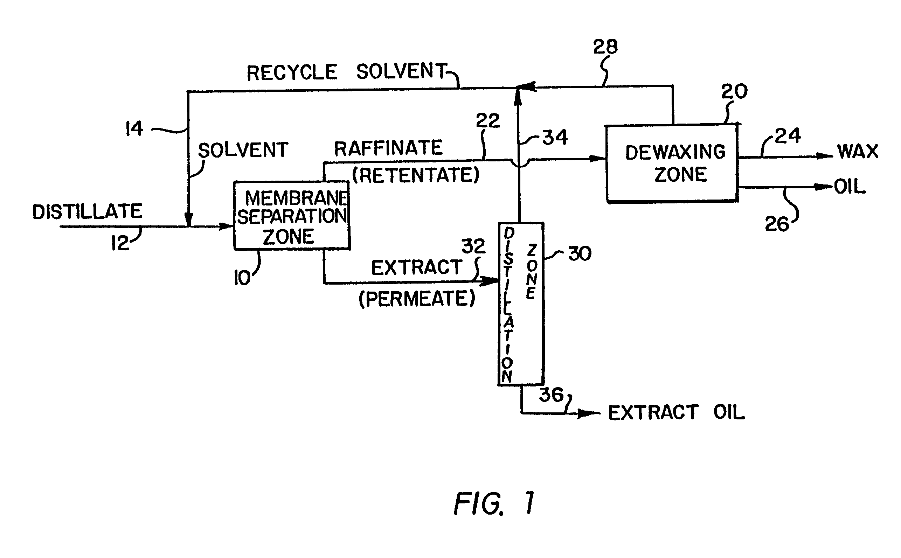

## Brief Description of the Drawing

The Figure represents a simplified process flow diagram of one method for practicing the subject invention.

## Detailed Description of the Invention

Referring to the Figure, a process flow diagram is shown for practicing the subject invention in which a common solvent is utilized in the membrane separation zone and in the dewaxing zone. In this Figure, all pumps, piping, instrumentation, controls, etc. not essential for an understanding of the invention have been deleted for clarity. Lube oil feedstock, such as raw distillate from a pipestill, is shown entering membrane separation zone 10 through line 12, after being admixed with solvent to facilitate the separation of aromatics components in the feedstock from the non-aromatics components. The solvent utilized may comprise fresh solvent, recycled solvent or a mixture thereof. In the embodiment shown, recycle solvent in line 14 is admixed with the lube oil feedstock.

Membrane separation zone 10 is shown comprising a suitable process vessel having a semi-permeable membrane therein adapted for the separation of the aromatics feed components from the non-aromatics. In the embodiment shown, the membrane is adapted to selectively permeate the aromatics components assisted by solvent under reverse osmosis conditions. The raffinate or retentate, having a reduced aromatics content, is shown passing from membrane separation zone ·10 to dewaxing zone 20 through line 22.

Dewaxing zone 20 may be of conventional design for the chilling and subsequent separation of the feed into a wax fraction exiting through line 24 for further processing (not shown) and a lube oil fraction exiting through line 26 for further processing (also not shown). Solvent removed from the dewaxing zone may be recycled through lines 28 and 14 for dilution of the lube oil feedstock. Additionally, solvent may be recycled within the dewaxing zone by means known by those skilled in the art.

The extract phase comprising aromatics and solvent passes from membrane separation zone 10 into distillation zone 30 for separation of solvent from the aromatics. The solvent may be recirculated through lines 34 and 14 for admixture with the raw distillate feed. The extract oil exits distillation zone 30 through line 36 for further processing (not shown).

The utility of the present invention may be seen from the following tests using a 150 Neutral feedstock with the properties shown in Table I. A feedstock was contacted with 178 v/v percent of NMP solvent at a temperature of 70°C and atmospheric pressure in a conventional liquid-liquid extraction zone having 3-4 theoretical trays. The compositions of the entering and exiting streams is presented in Table II.

Example I illustrates that use of a dewaxing solvent in combination with a pressure driven membrane produces a raffinate with a greatly reduced aromatic content. An Enka PM 250 cellulose membrane 17.5 $\mu$

thick was prepared for testing by soaking in water to remove the plasticizer. Methanol subsequently was pressure permeated through the membrane at 400 psig at ambient temperature, i.e., about 23°C for one hour, followed by MEK permeation for one hour at 400 psig and ambient temperature. A 150 N feed subsequently was mixed with approximately an equal volume of MEK solvent at 40°C and permeated through the pretreated Enka PM 250 regenerated cellulose membrane under 400 psig operating pressure. The properties of the raffinate produced by the membrane separation process also are presented in Table II.

## Table I

### PHYSICAL PROPERTIES OF 150 NEUTRAL FEEDSTOCK

| | |
|---|---|
| API | 31.2 |
| Density @ 15°C g/cc | 0.8692 |
| RI @ 20°C | 1.4817 |
| Viscosity @ 37.8°C, cst | 27.54 |
| Viscosity @ 98.9°C, cst | 4.74 |

## Table II

COMPARISON OF CONVENTIONAL SOLVENT
EXTRACTION AND MEMBRANE EXTRACTION

| Parameter | Conventional Extraction | EXAMPLE I Membrane Separation |
|---|---|---|
| Solvent | NMP | MEK |
| Solvent/Feed Ratio | 178 | 95 |
| Feed Aromatics Content, Wt.% | 43 | 43 |
| Raffinate Aromatics Content, Wt.% | 20 | 27 |
| Extract Aromatics Content, Wt.% | 80 | 86 |
| Yield, LV% | 62 | 66 |
| Temperature | 70°C | 40°C |

Direct comparisons using NMP in a membrane separation process or MEK in a conventional extraction process are not possible. MEK is completely soluble in the feedstock and could not act as an extraction solvent. Conversely, NMP is relatively insoluble in oil feedstock at low temperatures. Moreover, NMP does not act as a viscosity modifier for oil feedstock. Thus, NMP is not suitable in a solvent assisted pressure driven membrane separation process if the same solvent is to be used for both extraction and dewaxing.

The use of a dewaxing solvent-assisted membrane separation zone thus permits the use of a common solvent for both the extraction and dewaxing steps, thereby eliminating the necessity for passing the raffinate through a distillation zone to strip off the extraction solvent prior to the raffinate entering the dewaxing zone. This results in considerable investment and energy savings. However, it also is contemplated that the composition of the solvent added to the distillate and to the retentate may differ. For example, methyl ethyl ketone could be added to the distillate and methyl isobutyl ketone could be added to the raffinate exiting the membrane separation zone without intermediate removal of the MEK. In addition to the foregoing advantages, the membrane separation zone also operates at a lower temperature than the extraction zone thereby offering energy advantages.

The membrane separation zone utilized in this operation may be of conventional design, such as that described in U. S. Patent No. 4,368,112, the disclosure of which is incorporated herein by reference. The membrane utilized in separation zone 10 may be any type which will satisfactorily separate aromatics compounds from non-aromatics. The membrane utilized in the illustrative example to separate aromatics from non-aromatics was a regenerated cellulose membrane having a molecular weight cutoff ranging between about 6,000 and about 12,000. This membrane was a commercially available membrane manufactured by Enka of West Germany. The membrane was preconditioned by successive solvent exchange as described in U. S. Patent No. 4,368,112. The membrane separation zone may be maintained at a pressure ranging between about 300 and about 800 psig, preferably between about 400 and about 600 psig. The temperature in membrane separation zone 10 is maintained above the wax cloud point of the solution but below the temperature at which the membrane collapses.

In practicing this aromatics upgrading permeation process the membrane can be employed as an element in any convenient form. These membranes in the form of tubes or fibers can be bundled, potted and manifolded, much in the manner described in U. S. Patent No. 3,228,877. Similarly, membranes in the form of sheets can be employed in plate and frame configuration or in the form of spiral wound elements, some designs of which are in U. S. Patent No. 3,417,870, U. S. Patent No. 3,173,867, U. S. Patent No. 3,367,504, U. S. Patent No. 3,386,583, U. S. Patent No. 3,397,790, to list just a few.

The spiral wound element will typically comprise layers of membrane wound around a central tube (metal or solvent resistant plastic) containing holes for the permeate, the membrane layers being separated by alternate layers of a permeate carrier, such as knitted Simplex (Dacron, with melamine formaldehyde stiffener), and a feed spacer made of Vexar (a polypropylene mesh). Membrane layers are typically sealed using an epoxy adhesive to sandwich the permeate cloth into a closed envelope in fluid communication with the perforated central tube leaving the perforations in the central tube as the only permeate outlet. The preferred epoxy adhesive will generally comprise a resin formulation, such as one comprising (1) Epon 828, which is a reaction product of bisphenol-A and epichlorohydrin; (2) Cabosil M5; (3) Versamid 140 (a polyamide curing agent); (4) Estane 5707F-1 (a polyurethane from B. F. Goodrich); and (5) DMF solvent wherein the components 1/2/3/4/5 are present in typical relationship based on parts by weight of about 100/10/60/4/12, which cures at about 25°C over a 21 day period. This adhesive system is described and claimed in copending application U. S. Serial No. 494,409, filed May 13, 1983. The layers of membrane, permeate carrier, and feed spacer are wound around the central tube in a fashion consistent with preparing a spiral wound element. After the element is cured, the ends of the element are trimmed, a nylon seal carrier and a nylon anti-telescoping device are then added. The element is then covered on the outside with an epoxy reinforced fiberglass outer wrap. Elements of any size can be prepared, but typical elements are about 8 inches of diameter and about 40 inches long, and have about 225 square feet of membrane area and can be used at feed flow rates of about 30-50 gallons per minute at a 5-15 psi pressure drop.

To promote the solvent assisted permeation of aromatics in membrane separation zone 10, the lube oil feedstock must be admixed with a solvent. To integrate the extraction and dewaxing processes, dewaxing solvent must be used. The amount of solvent which must be admixed with the lube oil feedstock depends on a number of variables, including the nature of the solvent and membrane and the raffinate specifications, e.g., the aromatic content and viscosity index (VI). The resulting flux in the membrane separation zone depends on the operating temperature and pressure of the membrane utilized, and the amount of solvent utilized. Typically, the feedstock will be diluted with about 0.5 to about 9.0 v/v of solvent, preferably about 0.8 to about 1.2 v/v of solvent, prior to entering membrane separation zone. Typical oil flux, not including solvent flux, is about 50 to about 100 $l/m^2$ per day.

The nature of the solvent utilized is not critical, but it must be a polar solvent compatible with the membrane. Among the preferred solvents are methyl ethyl ketone, methyl isobutyl ketone, acetone, toluene and mixtures thereof. While other solvents, such as N-methyl pyrrolidone, dimethyl sulfoxide or acetonitrile, also may be satisfactory in the membrane for aromatics separation, they are not suitable for dewaxing lube oil feedstocks. While the use of membrane separation zone 10 may be equivalent to conventional extraction zones where a separate solvent system is utilized for the dewaxing operation, the present invention is of particular utility where a common solvent is utilized for both aromatics removal and dewaxing, since intermediate solvent removal from the raffinate may be eliminated.

Dewaxing zone 20 may be of conventional design and may comprise any process reasonably adapted to separate wax from the lube oil. One or more rotary drum filters frequently are utilized to remove wax from the filtrate. Incremental dilution processes using non-autorefrigerative solvents, such as MEK, MIBK, toluene, acetone and mixtures thereof, are most suitable for the present invention.

The raffinate or retentate may be mixed with additional solvent as necessary in stream 22 and chilled to a temperature of about -10°C to about -20°C to crystallize the wax and form a slurry. Solvent also may be added to facilitate the oil-wax separation. About 1 to about 3 v/v of solvent normally is added to the retentate entering zone 20. Typically, a total of about 3 to about 8 volumes of solvent per volume of feed are used in the dewaxing zone 20 to maintain the desired viscosity and to facilitate wax/oil separation.

Distillation zone 30 may be of conventional design and may be any design which will produce effective separation of the solvent from the aromatics.

In this patent specification :

| | | |
|---|---|---|
| inch | = | 2.54 cm |
| square foot | = | 929 $cm^2$ |
| gallon (U.S) | = | 3.785 litres |
| psi | = | 6.895 kPa |
| psig | = | 6.895 kPa gauge pressure |
| $\mu$ | = | $1 \times 10^{-6}$ m |

RI is an abbreviation for refractive index.

An API gravity of 31.2 is equivalent to a specific gravity of 0.8697.

The adhesive system described and claimed in copending USSN 494,409 referred to supra is described and claimed in our European Patent Application No. filed on or about the same date as the present application under the title "Adhesive System for the Production of Spiral Wound Membrane Elements for Use in Organic Fluid Mixture Separations" (inventors : William M. King and William W Wight).

0160142

- 14 -

CLAIMS:

1. A method for removing aromatics compounds and wax from a lube oil distillate, said method characterized by:

(a) admixing solvent with the lube oil distillate and passing the mixture through a membrane separation zone adapted to separate the mixture into a permeate relatively rich in aromatics and a retentate relatively lean in aromatics; and,

(b) passing retentate from the membrane separation zone to a dewaxing zone wherein the retentate is separated into a relatively wax-free fraction and a fraction relatively rich in wax.

2. The method of claim 1 hereinabove further characterized by the membrane separation zone comprising a solvent assisted reverse osmosis membrane separation zone.

3. The method of either of claims 1 or 2 hereinabove further characterized by passing retentate from the reverse osmosis membrane separation zone to the dewaxing zone without intermediate solvent removal.

4. The method of any of claims 1-3 hereinabove further characterized by the solvent admixed with the lube oil distillate comprising a dewaxing solvent.

5. The method of any of claims 1-4 hereinabove further characterized by the solvent being selected from the group consisting of acetone, methyl ethyl ketone, methyl isobutyl ketone, toluene and mixtures thereof.

6. The method of any of claims 1-5 hereinabove further characterized by solvent being separated from at least one of the fractions exiting from the dewaxing zone and wherein solvent so separated is recycled for admixture with the lube oil distillate.

7. The method of any of claims 1-6 hereinabove further characterized by solvent being separated from the permeate and recycled for admixture with the lube oil distillate.

8. The method of any of claims 1-7 hereinabove further characterized by the membrane utilized in the membrane separation zone being adapted to selectively pass aromatics and being selected from the group of compounds consisting of regenerated cellulose, polyimides and polyacrylonitriles.

9. The method of any of claims 1-8 hereinabove further characterized by the operating pressure in the membrane separation zone ranging between about 300 and about 800 psig.

10. The method of any of claims 1-9 hereinabove further characterized by about 1 to about 3 v/v of solvent being added to the retentate entering the dewaxing zone.

FIG. 1

## EUROPEAN SEARCH REPORT

| | DOCUMENTS CONSIDERED TO BE RELEVANT | | EP 84303219.4 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| D,A | <u>US - A - 2 947 687</u> (R.J. LEE)<br>* Claims; column 3, line 12 - column 9, line 12 *<br>-- | 1,5,8 | C 10 G 31/11 |
| A | <u>US - A - 3 043 891</u> (J.M. STUCKEY)<br>* Claims; column 3, line 5 - column 8, line 54 *<br>-- | 1,8 | |
| A | <u>US - A - 3 305 595</u> (J.F. PAULSON)<br>* Claim; column 1, line 10 - column 2, line 68 *<br>---- | 1 | |
| | | | **TECHNICAL FIELDS SEARCHED (Int. Cl. ³)** |
| | | | C 10 G 21/00<br>C 10 G 73/00<br>C 10 G 31/00 |

The present search report has been drawn up for all claims

| Place of search<br>VIENNA | Date of completion of the search<br>12-07-1984 | Examiner<br>STÖCKLMAYER |
|---|---|---|